# EUROPÄISCHE PATENTSCHRIFT

(11) **EP 4 584 568 B1**
(45) Veröffentlichungstag und Bekanntmachung des Hinweises auf die Patenterteilung: **22.04.2026**
(21) Anmeldenummer: 23741658.1
(22) Anmeldetag: 11.07.2023
(51) Int. Cl.: G01M 11/06, G01S 7/497, G01J 1/02

(54) **VERFAHREN ZUR KALIBRIERUNG VON FAHRZEUGSCHEINWERFERN**
METHOD FOR CALIBRATION OF VEHICLE HEADLIGHTS
PROCÉDÉ DE CALIBRAGE DE PHARES DE VÉHICULE

(30) Priorität: 09.09.2022 DE 102022003313
(43) Veröffentlichungstag der Anmeldung: 16.07.2025
(73) Patentinhaber: Mercedes-Benz Group AG, 70372 Stuttgart (DE)
(72) Erfinder: YARGELDI, Sinan, 72581 Dettingen an der Erms (DE)
(74) Vertreter: Novagraaf Group
(86) Internationale Anmeldenummer: PCT/EP2023/069204
(87) Internationale Veröffentlichungsnummer: WO 2024/051988

(56) Entgegenhaltungen:
- EP-A1- 3 476 653
- US-A- 5 321 439
- US-A1- 2004 167 697
- US-A1- 2020 348 127

## Beschreibung

Die Erfindung betrifft ein Verfahren zur Kalibrierung von Fahrzeugscheinwerfern nach der im Oberbegriff von Anspruch 1 näher definierten Art.

Prinzipiell sind Verfahren zur Kalibrierung von Fahrzeugscheinwerfern aus dem Stand der Technik bekannt. Derartige Verfahren sind notwendig, da die Scheinwerfer von Fahrzeugen oft verstellt sind. Selbst bei Fahrzeugen mit automatischer Leuchtweitenregulierung kommt es im Laufe der Zeit zu mechanischen Verspannungen, thermischen Ausdehnungen bzw. Kontraktionen sowie zu Schrittverlusten von eingebauten Schrittmotoren. All diese Faktoren führen zu einer allmählichen Fehlstellung der Scheinwerfer.

Insbesondere vertikale Fehlstellungen stellen ein sicherheitsrelevantes Problem dar, da diese zum Blenden des Gegenverkehrs oder auch zu einer verringerten eigenen Sichtweite führen. Daher sollten die Scheinwerfereinstellungen in regelmäßigen Abständen kontrolliert werden.

So ist aus der DE 10 2020 007 613 A1 ein Verfahren zur Generierung einer dreidimensionalen Tiefeninformationskarte einer Umgebung bekannt. Hierbei werden Lichtmuster mittels eines Projektors in die Umgebung projiziert und mit einer Kamera aufgenommen. Die Kamerabilder können anschließend ausgewertet werden, wobei jeweilige Positionen von Merkmalspunkten auf ihren entsprechenden Epipolarlinien erkannt werden und durch Ermitteln einer Verschiebung der Merkmalspunkte auf diesen Linien Tiefeninformationen bezüglich der dreidimensionalen Karte gewonnen werden.

Weiteren Stand der Technik zeigt die DE 10 2017 222 708 A1. Diese beschreibt eine Kameravorrichtung für ein Fahrzeug, die eine 3D-Umfelderfassung durchführen kann. Dazu sind zumindest zwei Kameramodule mit zumindest teilweise überlappenden Erfassungsbereichen notwendig. Über eine Steuereinheit sowie eine Auswerteeinheit und einen Punktlichtprojektor kann mithilfe eines "Pseudo-Noise-Pattern" eine 3D-Umfelderfassung erfolgen.

In der DE 10 2016 118801 A1 wird ein Verfahren zum Einstellen von Scheinwerfern eines Fahrzeugs beschrieben. Dazu werden die einzelnen Leuchteinheiten der Scheinwerfer zeitlich versetzt angesteuert, um eine Szene zu beleuchten. Über einen vorgegebenen Zeitraum hinweg wird mittels einer von dem Fahrzeug umfassen Kamera die Szene aufgenommen. Durch die Helligkeitsverteilungsmuster, die durch die zeitlich versetzte Ansteuerung der Vielzahl von Leuchteinheiten resultieren, können Abweichungen zu einem Referenzmuster berechnet werden. Anschließend können die Scheinwerfer anhand der Abweichungen eingestellt werden. Zum weiteren Stand der Technik kann auf die DE10 2012 007 908 A1, DE 10 2016 006 391 A1, DE 10 2011 109 440 A1, DE 10 2015 203 889 A1, DE 10 2014 117 845 A1, DE 10 2017 117 594 A1 und DE 10 2020 000 292 A1 verwiesen werden.

Ferner kann zum weiteren allgemeinen Stand der Technik auf die US 5 321 439 A, die US 2020 / 348 127 A1, die EP 3 476 653 A1 und die US 2004 / 167 697 A1 verwiesen werden.

Zum aktiven Verstellen der Scheinwerfer, beispielsweise für die Leuchtweitenregulierung oder für Kurvenlichtfunktionen, werden Schrittmotoren verwendet. Diese können die Leuchtmodule im Scheinwerfer um eine Zielwinkel verstellen. Hierbei existieren auch Ansätze, die Scheinwerfereinstellungen automatisch und im Feld nachzustellen. Beispielsweise kann über eine Fahrerassistenzkamera die Lichtverteilung der Scheinwerfer im Fahrzeugfrontfeld erfasst und ausgewertet werden. Für eine derartige Auswertung werden meist markante Punkte der Hell-Dunkel-Grenze herangezogen (cut-off line), wie beispielsweise einem H0V0-Punkt. Diesen versucht man im Bild zu erkennen. In einer weiteren Variante können in passenden Situationen auch speziell für die Kalibrierung designte Lichtverteilungen ausgestrahlt werden, beispielsweise bei einem Start-up oder Sleep-Vorgang.

Auf Basis einer Entfernung von Pixeln im Kamerabild zu einem kalibrierten Referenzpunkt können anschließend vertikale und horizontale Differenzwinkel abgeschätzt und mit einer aktuell abgezielten Verstellung verglichen werden. Vertikale und horizontale Fehlstellungen können dadurch kompensiert werden. Schwierigkeiten liegen jedoch in unkontrollierten bzw. unkontrollierbaren Umweltbedingungen. Diese können die Lichtverhältnisse sowie die Struktur, Form und Positionierung der angeleuchteten Flächen betreffen. Auch können verschiedene Fahrzeuge unterschiedliche Leuchtsysteme aufweisen. Dabei können Unterschiede in der Farb- und Helligkeitsverteilung, einzelne Pixelfehler oder auch Ungenauigkeiten im optischen Pfad vorkommen, welche zu Unschärfe- und Farbverschiebungen führen können.

Einem Auswertealgorithmus können insbesondere Kanten- und Maximaldetektionen zugrunde liegen, was jedoch zu einer unpräzisen Kalibrierung mit ungenauen und variablen Merkmalsextraktion führen kann. Insbesondere sicherheitsrelevante Genauigkeiten von 0,1 % nach ECE können dabei nicht robust eingehalten werden. Auch durch die Einführung von hochauflösenden Lichtsystemen in Fahrzeugen, basierend beispielsweise auf LCD, DMD oder µLED Technologien, müssen immer komplexere Lichtverteilungen projiziert werden.

Die Aufgabe der hier vorliegenden Erfindung besteht nun darin, ein Verfahren zur Kalibrierung von Fahrzeugscheinwerfern zu schaffen, welches die zuvor genannten Nachteile überwindet.

Erfindungsgemäß wird diese Aufgabe durch ein Verfahren mit den Merkmalen im Anspruch 1 und hier insbesondere im kennzeichnenden Teil des Anspruchs 1 gelöst. Vorteilhafte Ausgestaltungen und Weiterbildungen ergeben sich aus den hiervon abhängigen Unteransprüchen.

Im Kern des erfindungsgemäßen Verfahrens erfolgen in einem ersten Schritt zumindest drei Aufnahmen, wobei eine erste Aufnahme mit Aufnahme eines Kalibiermusters, eine zweite Aufnahme ohne Kalibiermuster und eine dritte Aufnahme mit Aufnahme des inversen Kalibiermusters erfolgt, und wobei in einem zweiten Schritt die zweite Aufnahme von der ersten und dritten Aufnahme subtrahiert wird, um die Aufnahmen von einer vorliegenden Szene zu bereinigen, wobei das Kalibiermuster Kreise umfasst, wobei die Position der Kreise in der Aufnahme im Vorfeld bekannt ist, und wobei Mittelpunkte der Kreise auf horizontalen Linien angeordnet sind, und mittels einer Geradenapproximation jeder Kreismittelpunkt berechnet wird, wobei ermittelt wird, ob die Projektion des Kalibiermusters auf eine geeignete Fläche erfolgt, die zur Durchführung der Kalibrierung geeignet ist. Durch Subtrahieren der Bilder resultiert, dass zu jedem Zeitpunkt nur das Kalibrierungsmuster im Bild zu sehen ist. Dadurch wird der spätere Auswertealgorithmus deutlich vereinfacht und kann deutlich robuster durchgeführt werden. Damit wird ein System zur automatischen und hochgenauen Kalibrierung der Einstellung von hochauflösenden Scheinwerfersystemen in Fahrzeugen bereitgestellt.

Mit dem Verfahren zur Kalibrierung von Fahrzeugscheinwerfern wird eine Fehlstellung einer vordefinierten Lichtverteilung durch Auswerten von Bildern zumindest einer Fahrzeugkamera bestimmt. Anschließend kann beispielsweise durch die verbauten Schrittmotoren und Neudefinition der Nullstellung die Fehlstellung ausgeglichen werden. Während der Kalibrierung kann das Verfahren den Aufbau des Fahrzeugfrontfeldes erfassen und insbesondere ausgeben, ob sich vor dem Fahrzeug eine Wand befindet. Hierbei kann ebenso die Ausrichtung der Wand ermittelt werden. All diese Informationen können dafür benutzt werden, Projektionen aus dem Scheinwerfer an das vorliegende Frontfeld anzupassen.

Bevorzugt können in einem dritten Schritt die erste und dritte Aufnahme pixelweise verglichen werden, um einen Helligkeitsunterschied zwischen Pixeln gleicher Position zu erkennen.

Dabei kann es gemäß einer vorteilhaften Ausgestaltung vorgesehen sein, dass Bereiche mit sehr geringen Helligkeitsunterschiede als graue Bereiche dargestellt werden. Als graue Bereiche sind beispielsweise Bereiche außerhalb des Kalibrierungsmusters gekennzeichnet, die sich ebenso im Kamerabild, d. h. in der Aufnahme befinden, sodass diese nicht weiter ausgewertet werden müssen. Dies hat den Vorteil, dass eine Hintergrundszene in einem Grauwert dargestellt wird, der sich deutlich von den Projektionsbereichen des Scheinwerfers abtrennt. Zudem kann durch die Fusion beider inversen Bilder ein Einfluss eines optischen Übersprechens aktivierter Pixel, aufgrund des nicht perfekten optischen Kanals, eliminiert werden. Dadurch kann beispielsweise eine spätere Lokalisierung der Kreise verbessert werden.

Das Kalibiermuster umfasst Kreise, wobei die Position der Kreise in der Aufnahme im Vorfeld bekannt ist. Durch hochauflösende Systeme können gänzlich andere Projektionen für die Kalibrierung genutzt werden. Daher können beispielsweise Kreise verwendet werden, welche einige Vorteile bringen. Beispielsweise haben Kreise einen konstanten Mittelpunkt unabhängig vom Fokus des Leuchtsystems auf die Projektionsfläche. Dabei sind Kreise ebenso robust gegenüber Verzerrungen.

Mittelpunkte der Kreise sind auf horizontalen Linien angeordnet. Vorteilhafterweise ist die Positionierung der Kreise im Leuchtfeld des Scheinwerfers im Voraus bekannt. Dies kann beispielsweise über bekannte Abstände von parallelen Linien zueinander sowie über eine maximal erlaubte bzw. eine bekannte Distanz der Mittelpunkte erfolgen.

Mittels einer Geradenapproximation wird jeder Kreismittelpunkt berechnet, wobei ermittelt wird, ob die Projektion des Kalibiermusters auf eine geeignete Fläche erfolgt, die zur Durchführung der Kalibrierung geeignet ist. Beispielsweise kann durch eine geforderte maximale Verdrehung sowie die Abstände der parallelen Linien zueinander sichergestellt werden, dass eine Projektion auf eine Ebene erfolgt. Nur in einem solchen Fall sollte vorteilhafterweise mit der Kalibrierung fortgefahren werden.

Gemäß einer sehr vorteilhaften Weiterbildung der Idee kann es dabei vorgesehen sein, dass die Fahrzeugkamera vorkalibriert ist. Dies ist vorteilhaft, um die zuvor beschriebene Geradenapproximation durchzuführen. Auch zur Ermittlung einer Position und Rotation der Projektionsfläche, d. h. der Pose, ist eine vorkalibrierte Fahrzeugkamera von Vorteil.

Dabei kann es gemäß einer vorteilhaften Ausgestaltung vorgesehen sein, dass eine Pose einer Projektionsebene ermittelt wird, indem das Kalibiermuster horizontal und vertikal verdreht wird und die Pose der Projektionsebene über eine Verschiebung der Mittelpunkte der Kreise im Kamerabild berechnet wird. Dies erfolgt insbesondere dadurch, dass eine ebene Projektionsfläche angenommen wird. Daher können einem letzten Schritt über eine Ebenen-Pose, über Mittelpunktepositionen im Kamerabild sowie über bekannte Winkelpositionen der dazugehörigen Scheinwerferpixel die Orientierung des Scheinwerfers bestimmt und die zugehörige Fehlstellung abgeleitet werden. Bei den bekannten Winkelpositionen kann es sich um einen Vertikalwinkel zum Mittelpunkt und/oder einen Horizontalwinkel zum Mittelpunkt des Kreises handeln.

Ebenso bzw. alternativ kann der Scheinwerfer im Voraus kalibriert werden, um die Kreise als Merkmalspunkte für eine Triangulation von 3D-Koordinaten zu verwenden. Vorteilhafterweise werden dabei einmal zusätzlich 2 × 3 Aufnahmen für die zwei verschobenen Kalibrierungsmuster aufgenommen. In einem derartigen Fall wird insbesondere das entsprechende Kamera-Scheinwerferpaar als strukturiertes Lichtsystem verwendet.

Es ist ebenso denkbar, projizierte Kreise bei ihrer Ausbreitung im Raum als Kegelmäntel zu modellieren. Auch dabei kann die Position der Ringe im dreidimensionalen Raum präzise bestimmt werden, wobei direkt auf die Einstellung des Scheinwerfers zurückgerechnet werden kann, da eine Einbauposition der Scheinwerfer bekannt ist und sich somit der Lichtstrahl rekonstruieren lässt.

Eine weitere vorteilhafte Ausgestaltung kann es vorsehen, dass durch bekannte Winkelpositionen der kalibrierten Fahrzeugkamera die Pose ermittelt wird, wobei ebene Flächen und unstetige Szenen erkannt werden können, um Projektionen und/oder Animationen zur Inszenierung an die Projektionsebene anzupassen. Vorteilhafterweise kann dadurch eine exakte Vermessung der Projektionsfläche vor dem Fahrzeug durchgeführt werden, wobei nicht nur planare Oberflächen wie eine Wand oder die Fahrbahn, sondern auch komplexere und unstete Szenen erkannt werden können.

Weitere Vorteile des erfindungsgemäßen Verfahrens ergeben sich ferner aus den restlichen abhängigen Unteransprüchen und werden anhand der Ausführungsbeispiele deutlich, welche nachfolgend unter Bezugnahme auf die Figuren näher beschrieben werden.

Dabei zeigen:
- Fig. 1: eine mögliche Ausführungsform eines Kalibriermusters;
- Fig. 2: eine weitere mögliche Ausführungsform eines Kalibriermusters;
- Fig. 3: einen möglichen Ablauf des Verfahrens.

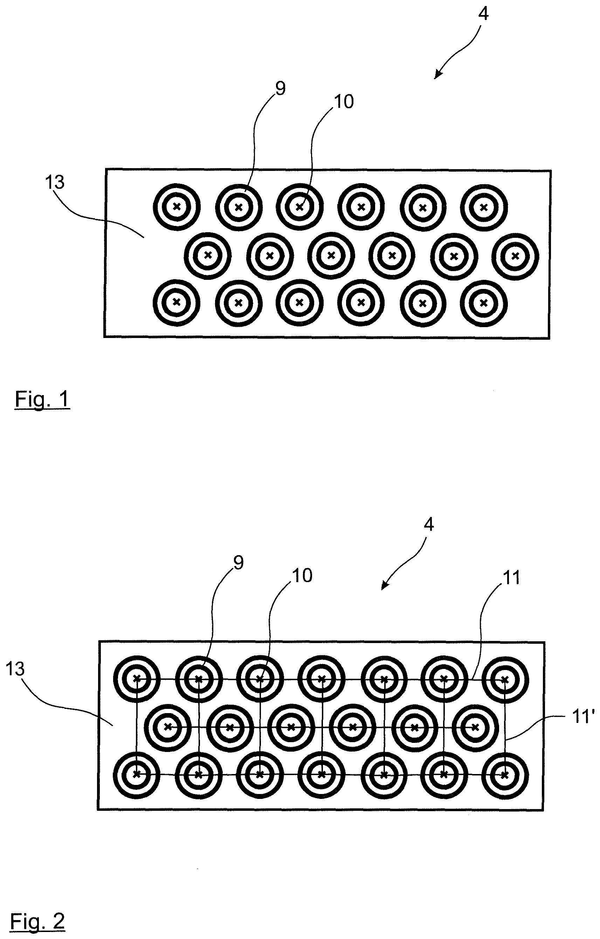

In der Darstellung der Fig. 1 ist eine mögliche Ausführungsform eines Kalibriermusters 4 gezeigt. Das Kalibrierungsmuster 4 weist einzelne Kreise 9 mit einem jeweiligen Mittelpunkt 10 auf. Die Fläche zeigt beispielsweise die Fläche eines Scheinwerfers 13 Eine weitere Ausführungsvariante des Verfahrens 1 ist in Fig. 2 zu erkennen. Im Unterschied zu Fig. 1 sind die Kreise 9 abweichend angeordnet. Weiterhin sind horizontale Linien 11 erkennbar, welche entlang der Mittelpunkte 10 verlaufen. Bei einem derartigen Kalibrierungsmuster 4 können zur Auswertung ebenso vertikale Linien 11' eingezeichnet werden, welche ebenso jeweils zwei Mittelpunkte 10 miteinander verbinden.

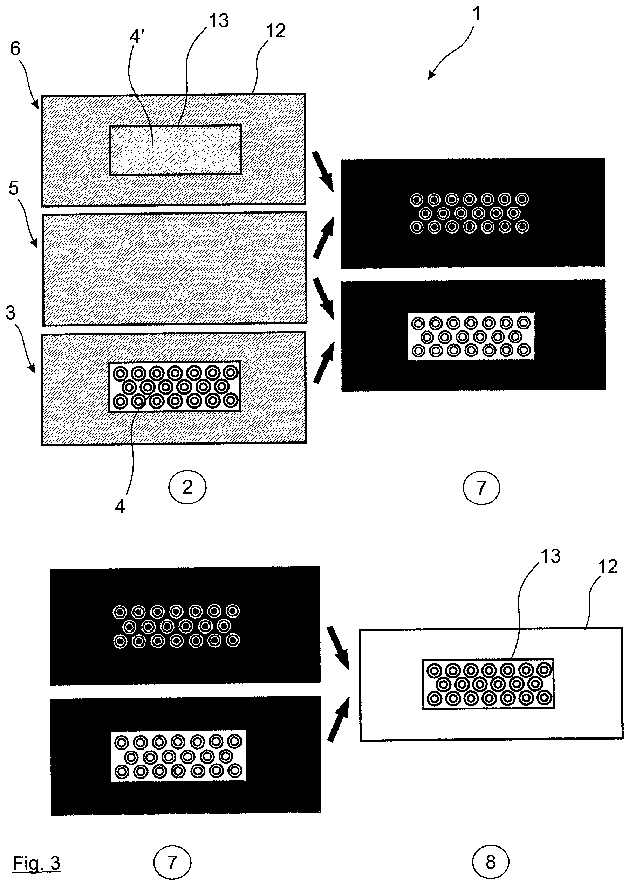

In Fig. 3 ist ein möglicher Ablauf des Verfahrens 1 dargestellt. Im ersten Schritt 2 werden drei einzelne Aufnahmen erzeugt. Eine erste Aufnahme 3 erfolgt mit Aufnahme des Kalibriermusters 4. Eine zweite Aufnahme 5 erfolgt ohne Kalibrierungsmuster 4. Eine dritte Aufnahme 6 erfolgt mit Aufnahme des inversen Kalibriermusters 4'. In einem zweiten Schritt 7 wird die zweite Aufnahme 5 von der ersten und der dritten Aufnahme 3, 6 subtrahiert. Dadurch können die Aufnahmen 3 und 6 von einer individuell vorliegenden Szene bereinigt werden. Aus Gründen der Übersicht ist der zweite Schritt 7 doppelt dargestellt. In einem dritten Schritt 8 werden die beiden Aufnahmen 3, 6 pixelweise miteinander verglichen, um einen Helligkeitsunterschied zwischen Pixeln gleiche Position zu finden. Geringe Helligkeitsunterschiede werden als graue Fläche dargestellt. Dies betrifft den Bereich außerhalb des Scheinwerfers 13, der leicht gestrichelt dargestellt ist.

Das Verfahren ermöglicht folglich eine einfache und automatische Kalibrierung der Scheinwerfer ohne zusätzliche Hardwarekomponenten. Vorteilhafterweise kann eine hohe Genauigkeit erzielt werden. Weiterhin ist das Verfahren robust gegenüber den Umgebungsverhältnissen und kann autonom und damit ohne Zusteuern eines Fahrers oder einer anderen Bedienperson erfolgen. Dies bringt einen Sicherheitsgewinn sowie einen Gewinn im Komfort mit sich. Ebenso kann das im Betrieb berechnete Profil des Projektionsraums dazu verwendet werden, Projektion des Fahrzeugs, zum Beispiel Start-up Animationen zur Inszenierung, an die vorhandene Projektionsfläche anzupassen.

## Patentansprüche

1. Verfahren (1) zur Kalibrierung von Fahrzeugscheinwerfern, wobei eine Fehlstellung einer vordefinierten Lichtverteilung durch Auswerten von Bildern zumindest einer Fahrzeugkamera bestimmt wird, wobei das Kalibiermuster (4) Kreise (9) umfasst, wobei die Position der Kreise (9) in der Aufnahme im Vorfeld bekannt ist, und wobei Mittelpunkte (10) der Kreise (9) auf horizontalen Linien (11) angeordnet sind, und mittels einer Geradenapproximation jeder Kreismittelpunkt (10) berechnet wird, wobei ermittelt wird, ob die Projektion des Kalibiermusters (4) auf eine geeignete Fläche erfolgt, die zur Durchführung der Kalibrierung geeignet ist,
**dadurch gekennzeichnet, dass**
in einem ersten Schritt (2) zumindest drei Aufnahmen erfolgen, wobei eine erste Aufnahme (3) mit Aufnahme eines Kalibiermusters (4), eine zweite Aufnahme (5) ohne Kalibiermuster (4) und eine dritte Aufnahme (6) mit Aufnahme des inversen Kalibiermusters (4') erfolgt, und wobei in einem zweiten Schritt (7) die zweite Aufnahme (5) von der ersten und dritten Aufnahme (3, 6) subtrahiert wird, um die Aufnahmen (3, 6) von einer vorliegenden Szene zu bereinigen.

2. Verfahren (1) nach Anspruch 1,
**dadurch gekennzeichnet, dass**
in einem dritten Schritt (8) die erste und dritte Aufnahme (3, 6) pixelweise verglichen wird, um einen Helligkeitsunterschied zwischen Pixeln gleicher Position zu erkennen.

3. Verfahren (1) nach Anspruch 2,
**dadurch gekennzeichnet, dass**
Bereiche mit sehr geringen Helligkeitsunterschiede als graue Bereiche dargestellt werden

4. Verfahren (1) nach einem der Ansprüche 1 bis 3,
**dadurch gekennzeichnet, dass**
die Fahrzeugkamera vorkalibriert ist.

5. Verfahren (1) nach einem der Ansprüche 1 oder 4,
**dadurch gekennzeichnet, dass**
eine Pose einer Projektionsebene ermittelt wird, indem das Kalibiermuster (4) horizontal und vertikal verdreht wird und die Pose der Projektionsebene über eine Verschiebung der Kreismittelpunkte (10) im Kamerabild (12) berechnet wird.

6. Verfahren (1) nach Anspruch 4 und 5,
**dadurch gekennzeichnet, dass**
durch bekannte Winkelpositionen der kalibrierten Fahrzeugkamera die Pose ermittelt wird, wobei ebene Flächen und unstetige Szenen erkannt werden können, um Projektionen und/oder Animationen zur Inszenierung an die Projektionsebene anzupassen.

## Claims

1. Method (1) for calibrating vehicle headlights, a misalignment of a predefined light distribution being determined by evaluating images from at least one vehicle camera, the calibration pattern (4) comprising circles (9), the position of the circles (9) in the image being known in advance, and the center points (10) of the circles (9) being arranged on horizontal lines (11), and each circle center point (10) being calculated by means of a straight-line approximation, and it being determined whether the calibration pattern (4) is projected onto a suitable surface suitable for carrying out the calibration,
**characterized in that,**
in a first step (2), at least three images are captured, a first image (3) being captured with a calibration pattern (4), a second image (5) being captured without a calibration pattern (4) and a third image (6) being captured with the inverse calibration pattern (4'), and, in a second step (7), the second image (5) being subtracted from the first and third images (3, 6) in order to clean up the images (3, 6) of a current scene.

2. Method (1) according to claim 1,
**characterized in that,**
in a third step (8), the first and third images (3, 6) are compared pixel by pixel in order to detect a brightness difference between pixels of the same position.

3. Method (1) according to claim 2,
**characterized in that**
regions having very small differences in brightness are displayed as gray regions.

4. Method (1) according to any of claims 1 to 3,
**characterized in that**
the vehicle camera is pre-calibrated.

5. Method (1) according to either claim 1 or claim 4,
**characterized in that**
a pose of a projection plane is determined by rotating the calibration pattern (4) horizontally and vertically and calculating the pose of the projection plane by shifting the circle center points (10) in the camera image (12).

6. Method (1) according to claim 4 and claim 5,
**characterized in that**
the pose is determined using known angular positions of the calibrated vehicle camera, it being possible to recognize flat surfaces and discontinuous scenes in order to adapt projections and/or animations for positioning to the projection plane.

## Revendications

1. Procédé (1) pour le calibrage de phares de véhicules, dans lequel une erreur de positionnement d'une répartition lumineuse prédéfinie est déterminée par l'évaluation d'images d'au moins une caméra de véhicule, dans lequel le modèle de calibrage (4) comprend des cercles (9), dans lequel la position des cercles (9) dans la prise de vue est connue à l'avance, et dans lequel des points centraux (10) des cercles (9) sont disposés sur des lignes horizontales (11), et chaque point central de cercle (10) est calculé au moyen d'une approximation de ligne droite, dans lequel on établit si la projection du modèle de calibrage (4) est effectuée sur une surface adaptée qui est adaptée à la réalisation du calibrage,
**caractérisé en ce que**
dans une première étape (2), au moins trois prises de vue sont effectuées, dans lequel une première prise de vue (3) est effectuée avec prise de vue d'un modèle de calibrage (4), une deuxième prise de vue (5) est effectuée sans modèle de calibrage (4) et une troisième prise de vue (6) est effectuée avec prise de vue du modèle de calibrage inverse (4'), et dans lequel, dans une deuxième étape (7), la deuxième prise de vue (5) est soustraite de la première et de la troisième prise de vue (3, 6) afin d'épurer les prises de vue (3, 6) d'une scène présente.

2. Procédé (1) selon la revendication 1,
**caractérisé en ce que**
dans une troisième étape (8), la première et la troisième prise de vue (3, 6) sont comparées pixel par pixel afin de reconnaître une différence de luminosité entre des pixels de même position.

3. Procédé (1) selon la revendication 2,
**caractérisé en ce que**
les zones comportant de très faibles différences de luminosité sont représentées sous forme de zones grises.

4. Procédé (1) selon l'une des revendications 1 à 3,
**caractérisé en ce que**
la caméra de véhicule est précalibrée.

5. Procédé (1) selon l'une des revendications 1 ou 4,
**caractérisé en ce que**
une pose d'un plan de projection est établie en faisant tourner horizontalement et verticalement le modèle de calibrage (4) et en calculant la pose du plan de projection par l'intermédiaire d'un coulissement des points centraux de cercles (10) dans l'image de caméra (12).

6. Procédé (1) selon la revendication 4 et 5,
**caractérisé en ce que**
la pose est établie par des positions angulaires connues de la caméra de véhicule calibrée, dans lequel des surfaces planes et des scènes discontinues peuvent être reconnues afin d'adapter des projections et/ou des animations au plan de projection pour la mise en scène.
